# EUROPEAN PATENT SPECIFICATION

(11) **EP 0 477 018 B1**
(45) Date of publication and mention of the grant of the patent: **06.12.1995**
(21) Application number: 91308564.3
(22) Date of filing: 19.09.1991
(51) Int. Cl.: G21B 1/00

(54) **Apparatus and method for utilizing heat generated owing to Pons-Fleischmann effect**
Vorrichtung und Verfahren zur Verwendung der durch den Pons-Fleischman-Effekt erzeugten Hitze
Equipement et méthode pour l'utilisation de la chaleur produite par effet Pons-Fleischman

(30) Priority: 20.09.1990 JP 248722/90
(43) Date of publication of application: 25.03.1992
(73) Proprietor: TECHNOVA INC., Tokyo 100 (JP)
(72) Inventor: Ikegami, Hideo, Higashi-ku, Nagoya-shi (JP)
(74) Representative: Votier, Sidney David

(56) References cited:
- WO-A-90/10935
- DE-A- 3 912 320
- DE-A- 3 916 397
- Berichte der Deutschen Chemischen Gesellschaft, vol. 59(8), 1926, pp. 2039-2048, Paneth & Peters: "Über die Verwandlung von Wasserstoff in Helium". "VAR alkemist i Tomegrand - en bok av och om John Tandberg", CWK Gleerup Bokförlag, Lund, Sweden, 1970, pp. 31-48.

## Description

### BACKGROUND OF THE INVENTION

The present invention relates to an apparatus and method for utilizing heat generated due to the effect caused by the absorption of hydrogen or an isotope thereof in a hydrogen-absorbing metal or alloy thereof.

Early experiments in this area of technology were reported in Berichte der Deutschen Chemischen Gesellschaft, vol. 59 (8), 1926, pp 2039-2048, which describes an experiment wherein hydrogen absorbed into palladium apparently underwent fusion and thereby formed helium; and in Var alkemist i Tomegränd - en bok av och om John Tandberg, CWK Gleerup Bokförlag, Lund, Sweden (1970), pp 31-48, which describes the work in the 1920's and later of the researcher John Tandberg whereby he proposed to increase the yield of helium by increasing the concentration of hydrogen atoms within the catalyst. He further proposed to place the reaction vessel in thermal contact with an element which converted the heat formed into a technically useful form.

In March 1989, Professor Pons and Professor Fleischmann announced at Utah University that an apparent excess heat was generated as compared to an input power. The experiment was as follows. Deuterated water (D₂O) containing lithium hydroxide (LiOD) is used as an electrolyte, a cathode made of a hydrogen absorbing material, or alloy thereof such as palladium and an anode made of platinum are immersed in the electrolyte, and DC current is applied across the anode and cathode to electrically decompose the electrolyte.

Their experiment has demonstrated that an amount of energy exceeding an amount of supplied energy is generated in the form of thermal energy. Since then, many scientists have verified the generation of such excess heat and today, this phenomenon is widely known as the Pons-Fleischmann effect (hereinafter referred to as P/F effect).

An apparatus utilizing such excess heat is disclosed in Figs. 1 to 8 of International Publication Number WO 90/10935. In the apparatus, a pipe for passing steam is laid in an electrolyte. The steam acts as a heat medium which deprives the electrolyte, raised in temperature owing to excess heat, of heat and that heat is converted into electrical energy by means of a steam generator.

### SUMMARY OF THE INVENTION

An object of the present invention is to highly efficiently utilize excess heat generated owing to the P/F effect.

With the cathode being made of a hydrogen absorbing material, when the cathode is heated to above its recrystallization temperature, the P/F effect cannot fulfill itself and to prevent this disadvantage, the generated amount of excess heat is controlled to adjust the temperature of the cathode. Needless to say, the temperature of the cathode should be prevented from rising to above its melting point.

To accomplish the above and other objects, according to one aspect of the invention, a member for transferring heat is connected directly to the cathode in order that excess heat is derived from the cathode efficiently and that heat is either used as it is or converted into energy of another form.

With the aim of controlling the amount of excess heat generated in the cathode, current applied across the cathode and anode is controlled.

Specifically, the invention provides an apparatus for utilizing heat generated due to the effect caused by the absorption of hydrogen or an isotope thereof, in a hydrogen-absorbing metal or alloy thereof, comprising:
a container in which a cathode comprising said hydrogen-absorbing metal or alloy thereof and an anode are supported;
an electrolyte in said container containing at least deuterated water;
a power supply for applying DC current across said cathode and anode;
heat transfer means comprising a solid portion made of thermally conductive material, said solid portion being connected thermally and fixedly to said cathode, for transferring heat generated in said cathode due to the said effect, and
means for performing work by utilizing heat transferred from said cathode by said transfer means.

### BRIEF DESCRIPTION OF THE DRAWINGS

Fig. 1 is a sectional view showing an embodiment of an apparatus according to the invention.

Fig. 2 is a perspective view showing a thermoelectric conversion device used in the embodiment.

Fig. 3 is a sectional view showing an embodiment of a catalyzer device using a catalyzer of pellet type.

Fig. 4 is a sectional view showing an embodiment of a catalyzer device using a catalyzer of monolithic type.

Figs. 5A, 5B and 5C are sectional views showing structures of the Fig. 4 monolithic type catalyzer.

Fig. 6 is a sectional view showing a modification of the apparatus.

Fig. 7 is a sectional view taken on the line A-A′ of Fig. 6.

Fig. 8 is a sectional view showing an embodiment of the thermoelectric conversion device.

Fig. 9 is a diagram showing the construction of a stirling engine.

Fig. 10 is a sectional view showing a modification of the thermoelectric conversion device.

Fig. 11 is a plan view of one unit of the Fig. 10 device.

Fig. 12 is a sectional view taken on the line B-B′ of Fig. 11.

Fig. 13 is a sectional view showing the connected state of individual units of the device.

Fig. 14 is a diagram useful to explain the principle of operation of a heat pipe.

Fig. 15 is a longitudinally sectional view of an embodiment of the heat pipe.

Fig. 16 is a crosssectional view of the embodiment of the heat pipe.

Fig. 17 is a sectional view showing an embodiment of a current controller according to the invention.

Fig. 18 is a diagram showing the Fig. 17 current controller in use.

Fig. 19 is a diagram showing the construction of an embodiment of a current controller using a CPU.

Fig. 20 is a diagram useful to explain the operation of the CPU.

Fig. 21 is a flow chart showing the operation of the Fig. 19 apparatus.

Fig. 22 is a diagram showing a transistor used as a switching element.

Fig. 23 is a diagram showing the construction of another embodiment of the current controller using the CPU.

Fig. 24 is a flow chart showing the operation of the Fig. 23 apparatus.

Fig. 25 is a table showing the relation between an optimum temperature and an optimum current value or voltage value.

Fig. 26 is a diagram useful to explain the operation of the CPU.

### DESCRIPTION OF THE PREFERRED EMBODIMENTS

Embodiments of the invention will now be described with reference to the accompanying drawings.

### Embodiment 1

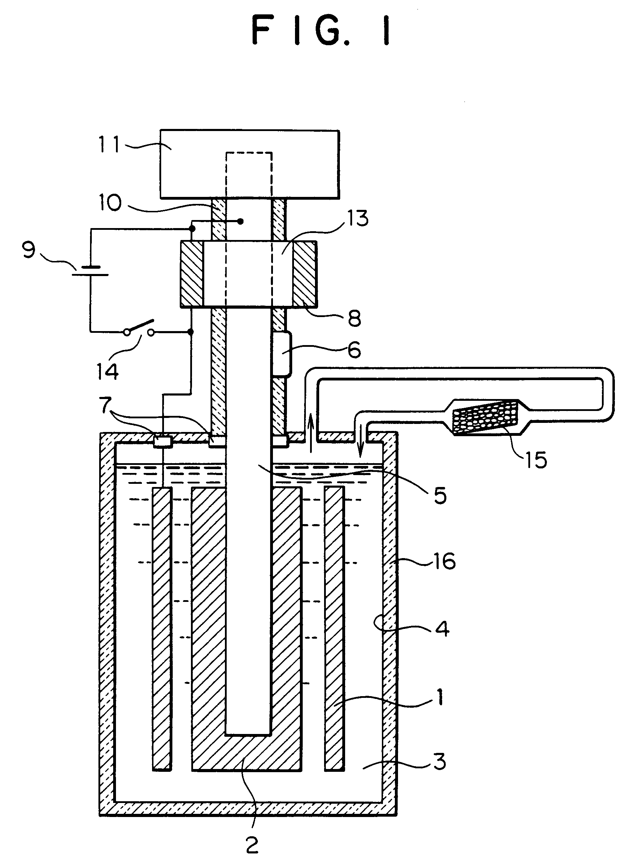

Firstly, an apparatus shown in Fig. 1 will be described. An electrolytic cell consists of the container 4, electrolyte 3, cathode 2 and anode 1. The container 4 made of a material such as for example stainless steel, glass, ceramics has a closed structure and the following are contained in the container 4. An electrolyte 3 is filled in the container and there are arranged or supported in the electrolyte 3 a cathode 2 and an anode 1 which opposes the cathode so as to be substantially uniformly distant therefrom. The electrolyte 3 contains deuterated water D₂O which preferably contains lithium hydroxide LiOD. Since the cathode 2 is raised in temperature owing to excess heat and consequently the container 4 is also heated, the outer wall of the container 4 is covered with a heat insulating material 16. The cathode 2 is made of an hydrogen absorbing metal such as palladium and a heat conductor 5, electrically and thermally conductive, is embedded in a central cavity of the cathode 2.

The embedding may be effected by (1) press fitting or (2) welding. Preferably, to prevent the intervention of a space between cathode 2 and heat conductor 5, a filler having high thermal conductivity such as grease may be interposed between the two members. Obviously, the grease can reduce resistance against press fitting to advantage.

Thanks to the heat conductor 5 embedded in the central cavity of the cathode 2, heat can be derived uniformly from the whole of the cathode 2.

The palladium material for the cathode 2 has a purity of, for example, 99.9% or more and takes a columnar shape; and preferably it is used after being reduced in crosssectional area by about 90% through cold forging process. The anode 1 is made of a metal material having acid- and alkali- proof properties such as platinum or gold and may have a rod-like or flat plate-like shape or a porous or mesh form. Preferably, the anode 1 may have a form which makes uniform the distribution of current supplied to the cathode 2. For example, when the cathode 2 is of a rod shape, the anode 1 may preferably be formed into a cylinder or a coil which surrounds the cathode 2.

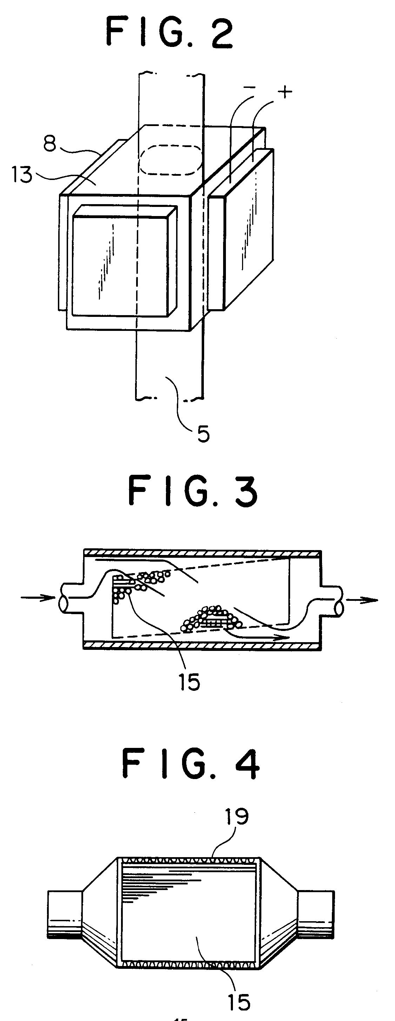

The heat conductor 5 is made of a thermally and electrically highly conductive material such as silver or copper and it penetrates the top plate of the container 4, terminating in an external fore end at which a first thermoelectric conversion device 11 is provided. The heat conductor 5 is electrically and thermally insulated from the container 4 by an insulator 7 of, for example, ceramics, resin or rubber. Further, a second thermoelectric converter 8 for conversion of thermal energy to electrical energy, as shown in Fig. 2, is mounted on the heat conductor 5 through a thermally highly conductive retainer 13. According to Fig. 1, also mounted on the heat conductor 5 is a temperature sensor 6 for detecting temperatures in the heat conductor 5. Other portions of the heat conductor 5 are all covered with a heat insulating material 10 such as glass wool to protect the heat conductor 5 from exposure directly to the open air. An externally provided power supply 9 has a positive pole connected to the anode 1 of the electrolytic cell and a negative pole electrically connected to the electrically conductive heat conductor 5 which is electrically connected to the cathode 2 of the electrolyzer. Output poles of the second thermoelectric conversion device 8 are connected in parallel with the power supply 9 so as to be connected electrically to the anode 1 and heat conductor 5, respectively.

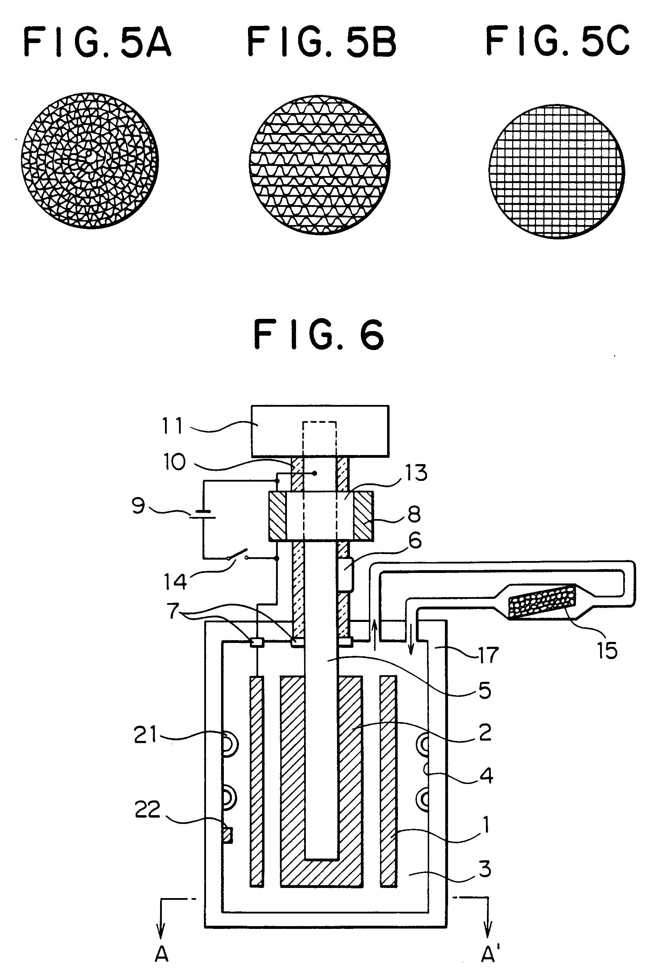

The container 4 has inlet and outlet ports and opposite ends of a pipe having a midway catalyzer chamber filled with catalyzer are connected to the inlet and outlet ports. The catalyzer 15 has the function of converting D₂ gas and O₂ gas both generated in the electrolytic cell into D₂O. Either a pellet type catalyzer or a monolithic type catalyzer in the form of a mesh or thin plate may be used as the catalyzer 15. Fig. 3 shows a catalyzer device having a catalyzer chamber charged with pellet type catalyzer 15 and Fig. 4 shows a catalyzer device having a catalyzer chamber charged with monolithic type catalyzer 15. The monolithic type catalyzer 15 may have an eddy form as shown in Fig. 5A, a stack form as shown in Fig. 5B or a lattice form as shown in Fig. 5C. The catalyzer 15 of the pellet type can be prepared by depositing platinum catalyst on the surface of particulate matter and the catalyzer 15 of the monolithic type can be prepared by depositing platinum catalyst on the surface of a mesh or thin plate.

The operation of this apparatus will now be described. When a necessary interval of time expires after the application of DC current from the power supply 9 to the anode 1 and cathode 2, an abrupt temperature rise takes place in the cathode 2. Heat generated in the cathode 2 is conducted to the heat conductor 5 and part of the heat is converted into electrical energy by means of the second thermoelectric conversion device 8. Since in this phase of operation the electrical energy stemming from the conversion of part of the heat generated in the cathode and conducted through the heat conductor 5 is sufficient to provide necessary electrical energy for electrolysis, a switch 14 is turned off to interrupt current from the power supply 9 and electrical power generated from the thermoelectric conversion device 8 is utilized for electrolysis. This signifies that the power supply 9 is merely required to be utilized as a starter power supply for generation of necessary thermal energy for steady operation. Of thermal energy conducting through the heat conductor 5, the remainder not utilized by the thermoelectric conversion device 8 is derived from the first thermoelectric conversion device 11 as electrical energy.

D₂ gas and O₂ gas generated in the electrolyzer through electrolysis pass through inlet and outlet pipes so as to undergo conversion to D₂O under the influence of the catalyzer 15 in the catalyzer chamber and circulate to return to the electrolyzer.

When, in the apparatus having the above construction, a rod of palladium of 10 mm diameter and 20 mm length produced through a cold forging or drawing process is used as the cathode, a coil of platinum arranged to surround the cathode is used as the anode, 100 ml of deuterated water containing 0.11 mol/l of LiOD is used as the electrolyte and electrolysis at fixed voltage is carried out under the condition that current flow is so adjusted as to take a value of 100 mA or more under the application of a voltage of 4V across both the electrodes (cathode and anode), the temperature in the cathode rises in proportion to the current.

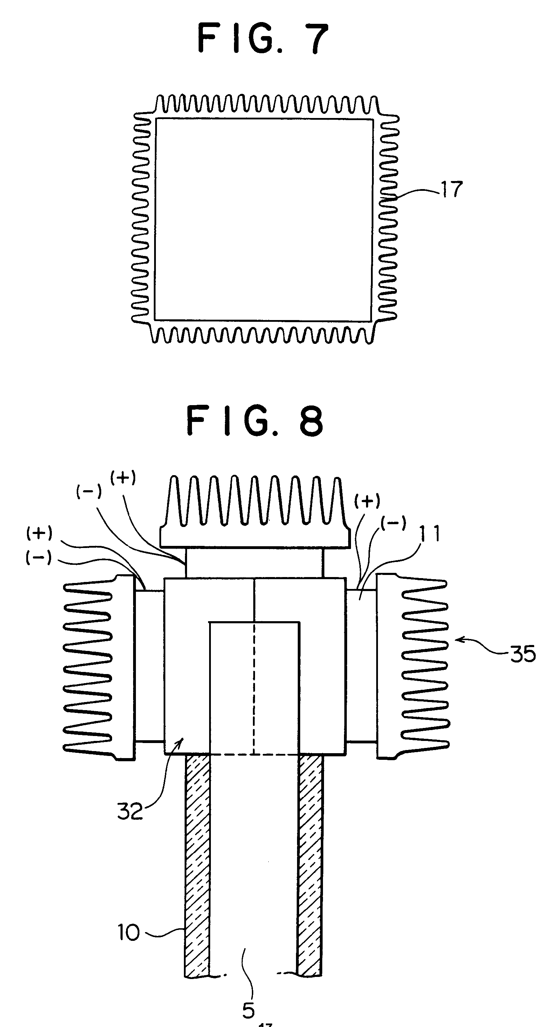

An apparatus as shown in Fig. 6 will now be described. The apparatus shown in Fig. 6 is a modification of the apparatus shown in Fig. 1. In the Fig. 6 apparatus, the heat insulating material 16 covering the container 4 in the Fig. 1 apparatus is replaced with a cooling fin 17. A crosssection of the cooling fin 17 taken on the line A-A′ of Fig. 6 is illustrated in Fig. 7. The surface area usable for heat dissipation can be increased by virtue of the cooling fin.

Further, in the Fig. 6 modification, a pipe 21 through which coolant is passed is arranged inside the container 4. In the Figure, reference numeral 22 designates a temperature sensor, and a controller not shown responds to a temperature of electrolyte 3 detected by the sensor 22 to adjust at least one of the temperature and/or the flow rate of the coolant.

In the foregoing embodiments, the first thermoelectric conversion device 11 may be connected in series to the second thermoelectric conversion device 8. In other words, the two devices 11 and 8 may be unified into a unitary device.

A more concrete example of the first thermoelectric conversion device 11 is shown in Fig. 8. In the illustrated example, in order to increase the temperature gradient between the inner periphery and the outer periphery of the device 11, a fin 35 for cooling is mounted to the outer periphery of the device 11. In the Figure, reference numeral 32 designates a retainer 32 which is made of a thermally highly conductive material.

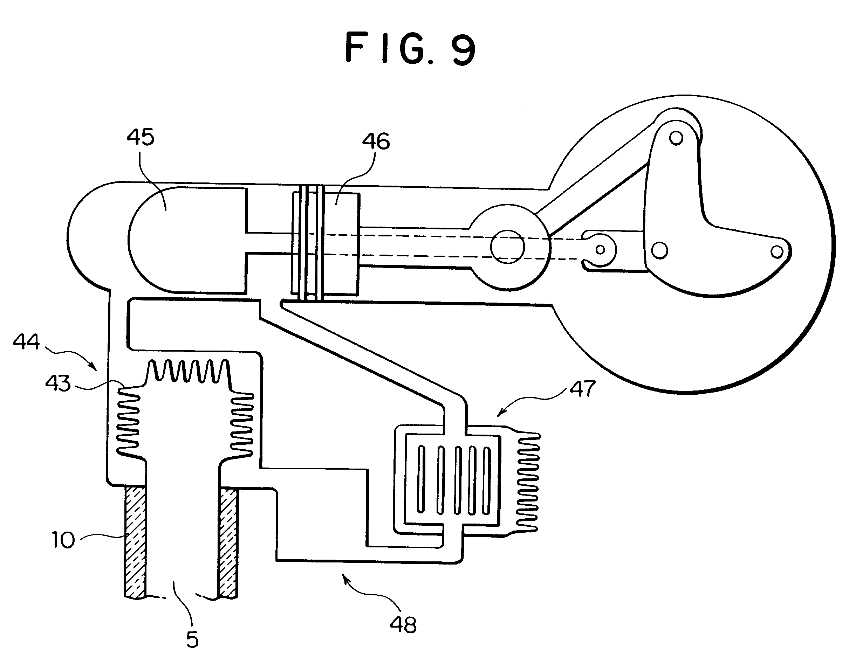

Further, the device 8, 11 may be replaced with a cooling fin 43, and the cooling fin 43 applies to a heater 44 of a stirling engine as shown in Fig. 9. Illustrated in Fig. 9 is an apparatus for converting thermal energy into mechanical energy.

The internal space of the heater 44 of the stirling engine is mostly occupied by an end portion of the heat conductor 5 and the end portion has its surfaces provided with a fin 43. The heater 44 has a passage through which a heated gas is fed to a cylinder chamber and in the cylinder chamber, there are provided a displacer piston 45 moved by the fed heated gas and a power piston 46 linked to the displacer piston. The cylinder chamber has an outlet port through which an , exhaust gas is discharged and a passage extending from the outlet port connects to a radiator 47 and a regenerator 48, so that the exhaust gas may finally be circulated to return to the heater 44.

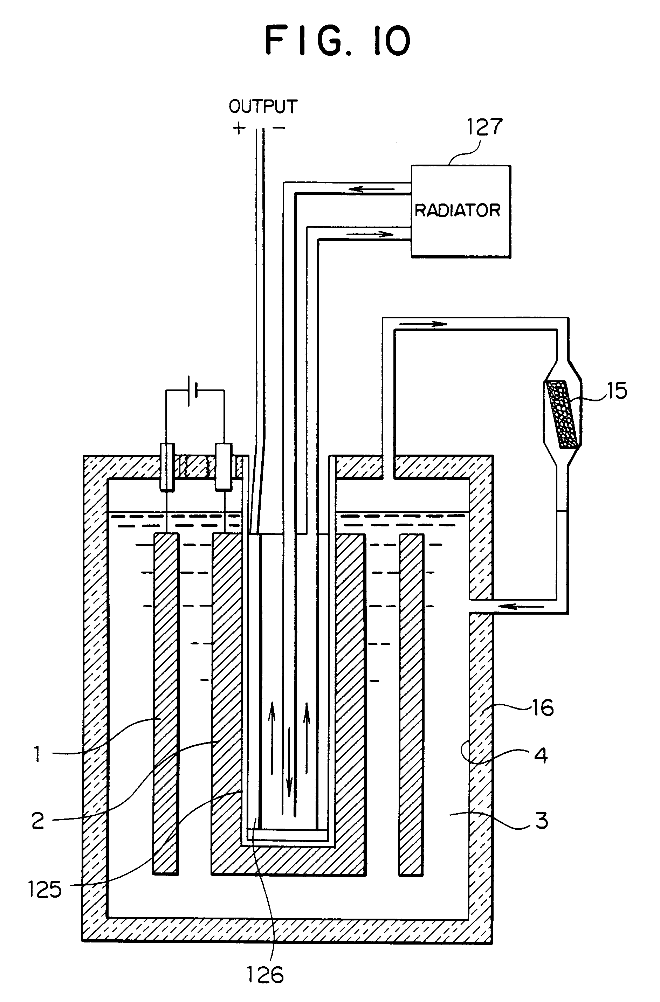

Fig. 10 exemplifies another thermoelectric conversion device 126. In Fig. 10 members operating equivalently to those in Fig. 1 are designated by the same reference numerals as in Fig. 1 and will not be described herein.

In this example, a laminar heat conductor 125 is stuck to the surface of a cavity formed in the cathode 2, and a thermoelectric conversion device 126 is laminated on the heat conductor 125. For the purpose of cooling the surface of the device 126, a heat medium (for example, air) is circulated through the central cavity of the assembly comprised of cathode 2, heat conductor 125 and device 126. Reference numeral 127 designates a radiator for cooling the heat medium.

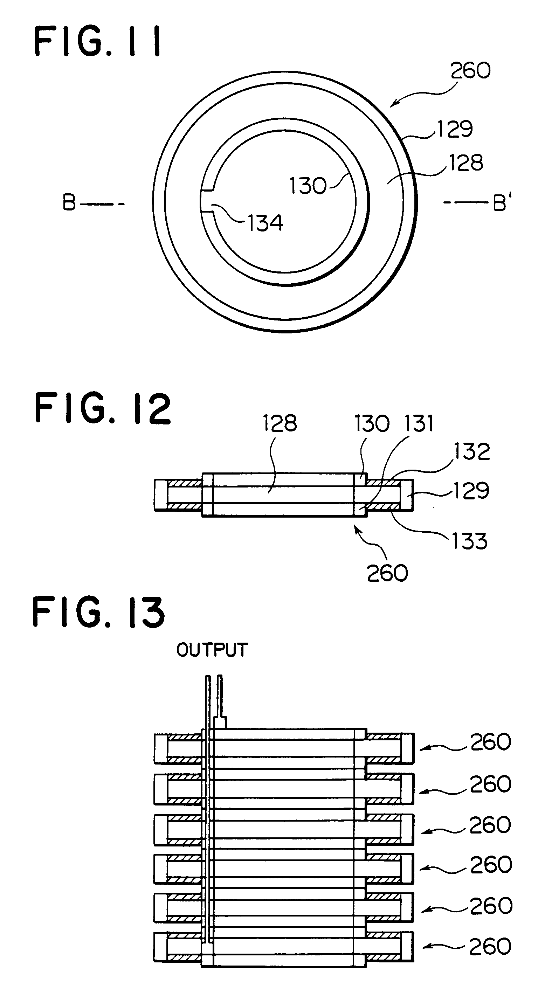

Figs. 11 to 13 show a specified construction of the device 126. One unit 260 of the device includes, as shown in Figs. 11 to 13, an annular insulating substrate 128, a conductor 129 formed on the outer periphery of the substrate 128, a pair of vertically spaced terminals 130 and 131 formed on the inner periphery of the substrate 128, a P-type semiconductor layer 132 interposed between the first terminal 130 and the conductor 129, and an N-type semiconductor layer 133 interposed between the second terminal 131 and the conductor 129. Each of the terminals 130 and 131 is formed with a cut 134. A plurality of the units 260 each having the above construction are stacked as shown in Fig. 13 and arranged inside the heat conductor 125. BY stacking the units as illustrated in Fig. 13, the upper terminal 130 of one unit 260 and the lower terminal 131 of another unit 260 can be connected in series with each other.

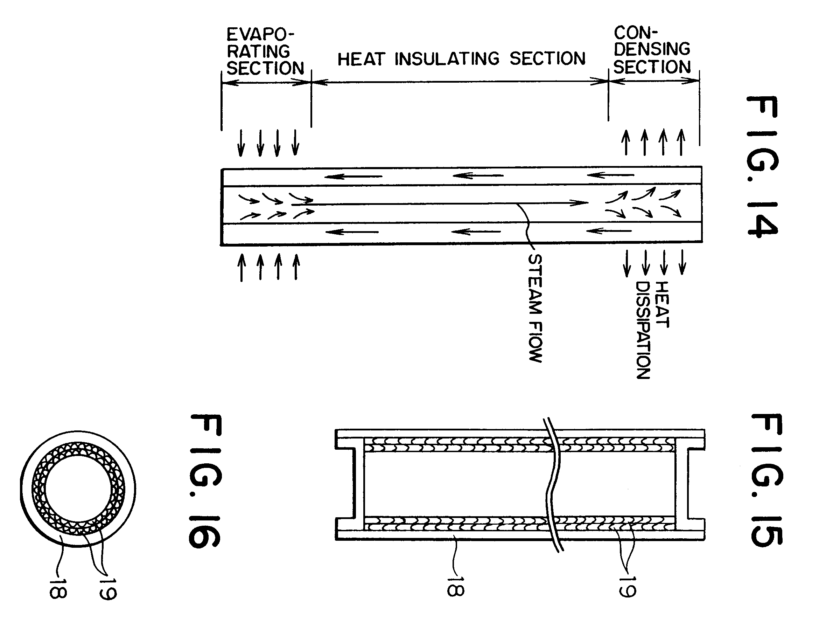

Returning to Fig. 1, the metal rod used as the heat conductor may be replaced with a heat pipe as shown in Figs. 14 to 16.

Fig. 14 is a diagram useful to explain the principle of operation of the heat pipe. Functionally, the heat pipe is divided into three sections which are an evaporating section for inputting heat into the pipe, a heat insulating section for causing heat to move as a steam flow inside the pipe, and a condensing section for outputting the moved heat. The operation of the heat pipe will now be described. Heat externally inputted to the pipe at the lower evaporating section thereof converts a working liquid or gas inside the heat pipe into a steam flow and the steam flow is caused to rise through the center of an inner tube of the heat pipe. The steam flow reaching the upper condensing section of the heat pipe dissipates heat and turns into a liquid flow which goes down through an outer tube of the heat pipe. Figs. 15 and 16 are a longitudinally sectional view and a crosssectional view of the heat pipe, respectively, and especially illustrate only the lower evaporating section and upper condensing section. A plurality of mesh layers 19 are lined on the inner wall, as designated at 18, of the outer tube made of, for example, Cu, SuS or A.

### Embodiment 2

In the present embodiment, a current controller 26 is added to the foregoing embodiment in order to control the amount of excess heat generated.

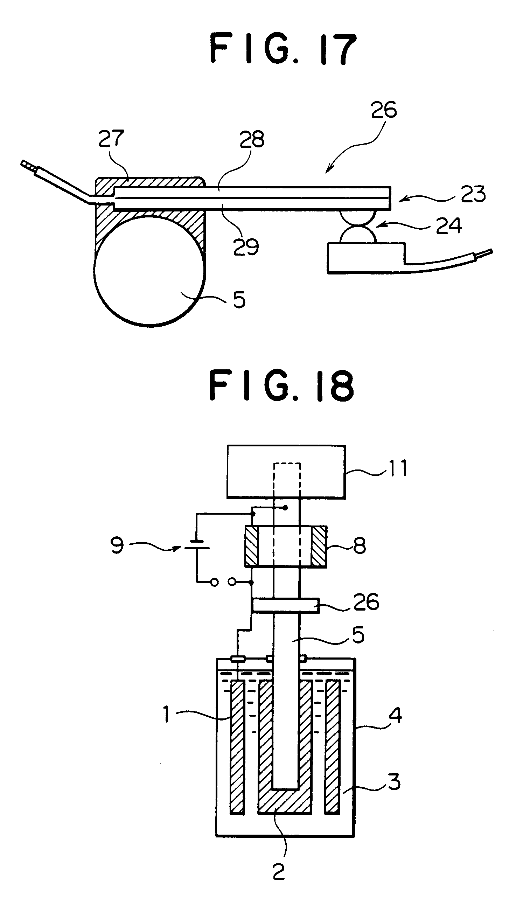

An apparatus of the invention will be described with reference to Figs. 17 and 18.

Fig. 17 shows a section of the whole of the current controller 26 according to the present embodiment. The current controller 26 is a bimetal structure 23 comprised of a low-expansion metal member 28 and a high-expansion metal member 29. The bimetal 23 has at its free end a contact 24 through which the controller electrically connects to the anode, having the opposite end connected to the power supply. An end portion, opposite to the contact 24, of the bimetal 23 is fixed to the heat conductor 5 by an insulator 27 such as resin. Fig. 18 is a sectional view showing the whole of the apparatus incorporating the current controller 26. The current controller 26 is fixed on the heat conductor 5 and electrically connected between the power source 9 and the anode 1.

With the apparatus having the above construction, when the temperature of the heat conductor 5 exceeds a predetermined value during operation, the current controller 26 is activated to stop current to the electrodes but when the temperature falls below the predetermined value, the current is allowed to be supplied, thus controlling the temperature of the cathode 2 and consequently the temperature in the electrolytic cell.

### Embodiment 3

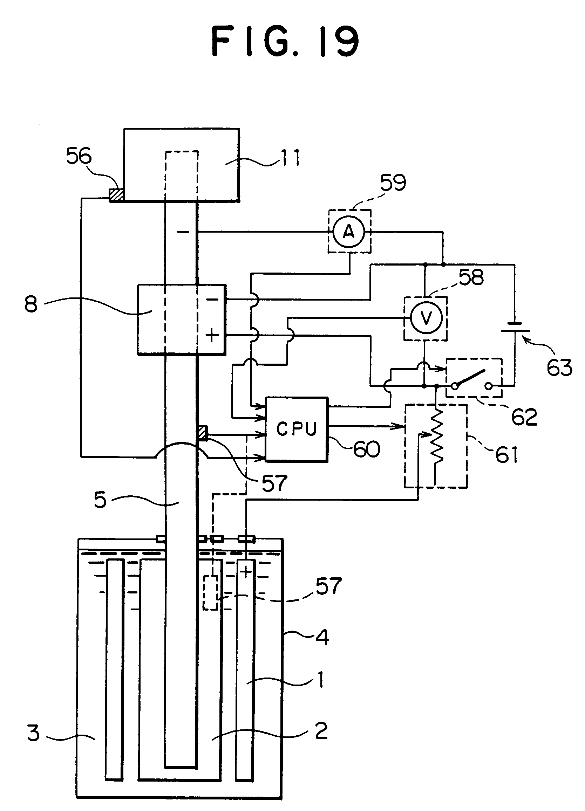

Fig. 19 shows a current controller utilizing a CPU. The same members as those explained in connection with Fig. 1 are designated by the same reference numerals and their description will be omitted.

In the present embodiment, a heat conductor 5 is mounted with a temperature sensor 57 for measuring temperatures in the heat conductor 5. Mounted to an energy deriving means 11 arranged at the top end of the heat conductor 5 is an output sensor 56 for measuring the magnitude of generated energy. When the derived energy is electrical energy, an ammeter or a voltmeter is used as the sensor. When the derived energy is mechanical energy, a tachometer, a pressure gauge or a temperature sensor is used as the sensor and measured values are delivered as electrical output signals.

A power supply 63 has one pole, positive, led to an anode 1 through a switch 62 and the other pole, negative, connected directly to the conductive heat conductor 5 so as to be led to a cathode 2. Positive polarity of electrical energy derived from a thermoelectric converter 8 is led to the anode 1 through a variable resistor 61 and negative polarity of the electrical energy is connected directly to the heat conductor 5 so as to be conducted to the cathode 2. A voltmeter 58 is connected in parallel with positive and negative outputs of the thermoelectric converter 8. An ammeter 59 is connected in series with an external circuit leading from the anode 1 and ending in the heat conductor 5. The temperature sensor 57, output sensor 56, voltmeter 58 and ammeter 59 are so connected that their output signals are inputted to a CPU 60. One of the output signals of the CPU 60 designates a proper resistance of the variable resistor 59 and sets the variable resistor to the proper resistance; and the other output signal performs on/off switching of the switch 62 which switches outputs of the power supply 63 and thermoelectric converter 8 both adapted to supply electrical energy to the electrodes.

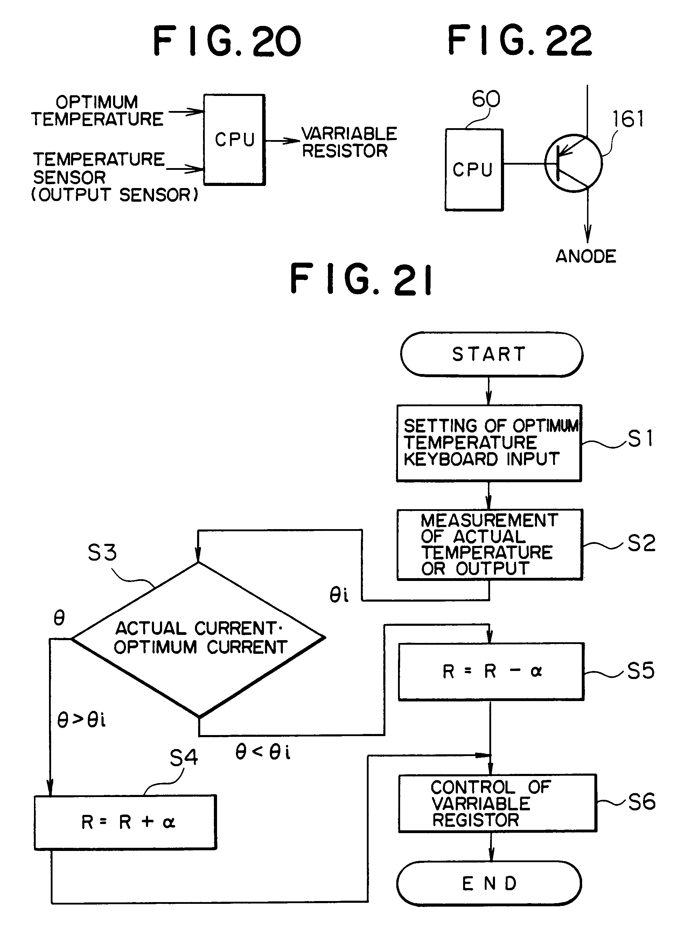

Fig. 20 shows, in block form, an example of the designation and setting of a proper resistance.

The manner of controlling the temperature or output will be described with reference to a flow chart shown in Fig. 21. Firstly, in step S1, an optimum temperature or optimum output ϑ1 is inputted to the CPU 60 in advance by means of a keyboard (not shown). Subsequently, a practically measured actual temperature or actual output ϑ is automatically inputted to the CPU 60 from the temperature sensor 57 or output sensor 56 (step S2), causing the CPU 60 to compare the optimum temperature or optimum output ϑ1 with the actual temperature or actual output ϑ delivered out of these sensors (step S3). If ϑ > ϑ1, calculation for increasing the resistance pursuant to R = R+α is carried out (step S4) and if ϑ < ϑ1, calculation for decreasing the resistance pursuant to R = R-α is carried out, so that the resistance of the variable resistor 59 may be changed automatically (step S6) to control the temperature of the cathode automatically.

In the present embodiment, an additional temperature sensor 57 may be embedded in the cathode 2 as shown at double dotted line in Fig. 19.

When the variable resistor 61 is replaced with a transistor 161 as shown in Fig. 22, the amount of excess heat generated can be controlled by changing the conduction time instead of changing the value of the current.

Alternatively, the value of the current may be controlled manually.

### Embodiment 4

While the aforementioned embodiment 3 is directed to a closed-loop electrical control circuit based on measured values of actual temperature or actual output, the present embodiment is directed to an open-loop circuit not based on the actual temperature or actual output. More specifically, in the present embodiment, the temperature sensor and output sensor used in embodiment 3 are omitted and instead, an optimum current value I1 (or optimum voltage value) is set by making reference to the relation, determined in advance, between an optimum temperature and the optimum current value I1 (or optimum voltage value).

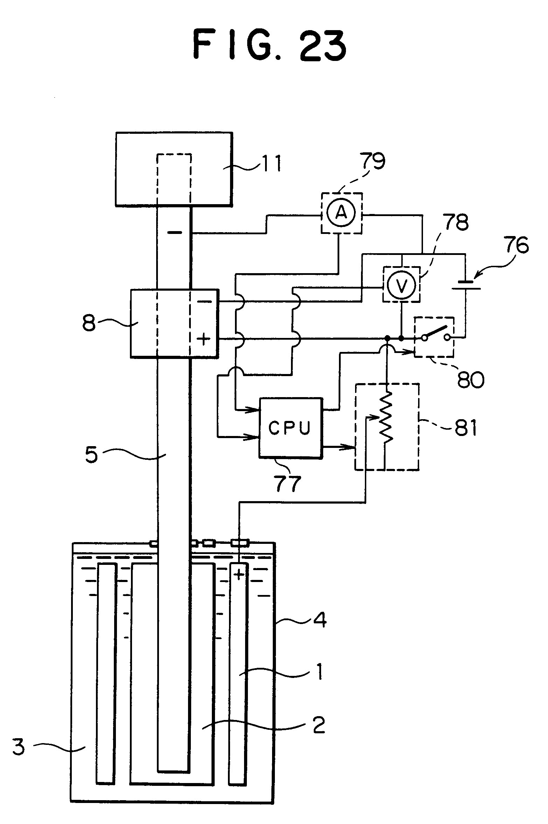

A temperature controller according to the present embodiment will be described with reference to Fig. 23. In contrast to embodiment 3 shown in Fig. 19, the output sensor and temperature sensor are omitted in the Fig. 23 embodiment and wiring is such that only signals from a voltmeter 78 and an ammeter 79 are automatically inputted to a CPU 77. Excepting the above, the construction is the same as that of embodiment 3.

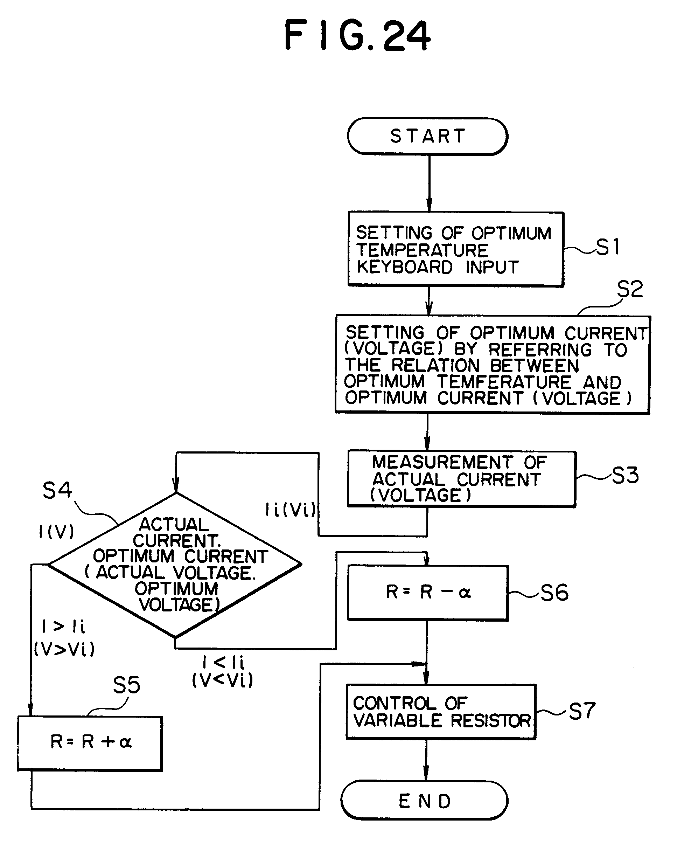

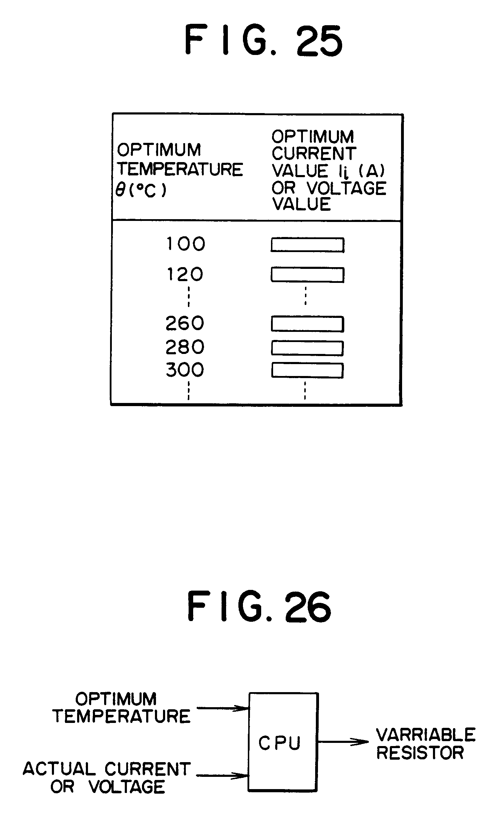

The manner of controlling the temperature or output according to the present embodiment will be described with reference to a flow chart shown in Fig. 24. An optimum temperature ϑ is inputted in advance to the CPU by means of a keyboard (step S1). Subsequently, by making reference to the relation between the optimum temperature and an optimum current value I1 (or optimum voltage value), which relation is determined in advance as shown in Fig. 25, the optimum current value I1 (or optimum voltage value) is set (step S2). Subsequently, in step S3, a practically measured actual current I (or actual voltage) is automatically inputted to the CPU as shown in a block diagram of Fig. 26, causing the CPU to compare the optimum current value Ii (or optimum voltage value) with the practically measured actual current I (or actual voltage) (step 4). If I > Ii, calculation for increasing the resistance pursuant to R = R+α is carried out (step S5) and if I < Ii, calculation for decreasing the resistance pursuant to R = R-α is carried out (step S6), so that the resistance of the variable resistor may be changed (step S7) to control the temperature of the apparatus.

In the foregoing embodiments, negative voltage is applied to the cathode through the conductor but obviously, the cathode may be connected directly to the power supply.

Although the present invention has been described in detail, it should be understood that various changes can be made thereto without departing from the scope of the present invention as defined by the appended claims.

## Claims

1. An apparatus for utilizing heat generated due to the effect caused by the absorption of hydrogen or an isotope thereof in a hydrogen-absorbing metal or alloy thereof, comprising:
a container (4) in which a cathode (2) comprising said hydrogen-absorbing metal or alloy thereof and an anode (1) are supported;
an electrolyte (3) in said container containing at least deuterated water;
a power supply (9; 63; 76) for applying DC current across said cathode and anode; characterized by
heat transfer means (5; 125) comprising a solid portion made of thermally conductive material, said solid portion being thermally and fixedly connected to said cathode, for transferring heat generated in said cathode due to the said effect; and
means (8, 11, 126) for performing work by utilizing heat transferred from said cathode by said transfer means (5; 125).

2. An apparatus according to claim 1 further comprising means (26; 56-61; 77-81) for controlling the amount of heat generated in said cathode (2).

3. An apparatus according to claim 2 wherein said control means controls the amount of heat generated in said cathode by changing the value of current applied by said power supply across said cathode (2) and anode (1).

4. An apparatus according to claim 3 wherein a variable resistor (61; 81) is connected between said power supply (63; 76) and the electrodes (1, 2) to control the value of said current.

5. An apparatus according to Claim 3 wherein a switch (23, 24; 161) is connected between said power supply (9; 63) and the electrodes (1, 2) to control the conduction time of said current.

6. An apparatus according to Claim 2 wherein said control means includes means (57) for detecting temperatures in said cathode (2), and means (61; 161) for changing, on the basis of a detected temperature, a value of current applied by said power supply (8, 63) to said cathode (2) and anode (1).

7. An apparatus according to Claim 2 wherein said control means includes means (57) for detecting temperatures in said heat transfer means (5), and means (61; 161) for changing, on the basis of a detected temperature, a value of current applied by said power supply (8, 63) to said cathode (2) and anode (1).

8. An apparatus according to Claim 2 wherein said control means includes means (56) for detecting amounts of work performed by said work performing means (11), and means (61, 161) for changing, on the basis of a detected amount of work, a value of current applied by said power supply (8, 63) to said cathode (2) and anode (1).

9. An apparatus according to Claim 1 wherein said work performing means utilizes heat transferred from said cathode, as it is, to raise temperatures in ambient atmosphere of said means.

10. An apparatus according to Claim 1 wherein said work performing means converts heat transferred from said cathode into a different type of energy.

11. An apparatus according to Claim 10 wherein said different type of energy is electrical energy.

12. An apparatus according to Claim 11 wherein said work performing means is a thermoelectric conversion device (8, 11).

13. An apparatus according to Claim 12 further comprising means for applying said electrical energy to the electrodes (1, 2).

14. An apparatus according to Claim 13 further comprising means (14; 62; 80) for switching the connection between said electrodes (1, 2) and said power supply (9; 63; 76) to the connection between said electrodes (1, 2) and said thermoelectric conversion device (8).

15. An apparatus according to Claim 10 wherein said different type of energy is mechanical energy.

16. An apparatus according to Claim 15 wherein said work performance means is an external combustion engine.

17. An apparatus according to Claim 16 wherein said external combustion engine is a sterling engine.

18. An apparatus according to Claim 1 wherein said heat transfer means (5) transfers heat generated in said cathode to said work performing means by means of a heat medium.

19. An apparatus according to Claim 18 wherein said heat medium is made of a solid material of high thermal conductivity and heat in said cathode conducts through said heat medium.

20. An apparatus according to Claim 19 wherein said solid material is a metal.

21. An apparatus according to Claim 18 wherein said heat medium is a fluid.

22. An apparatus according to Claim 21 wherein said fluid circulates through said cathode (2) and said work performing means (8, 11) while taking the same phase state, namely, maintaining the liquid or gas state.

23. An apparatus according to Claim 21 wherein said fluid circulates through said cathode (2) and said work performing means (8, 11) while taking a different phase state.

24. An apparatus according to Claim 23 wherein said fluid circulates in a heat pipe.

25. An apparatus according to Claim 18 wherein said heat medium (125) is laminar on the surface of said cathode.

26. An apparatus according to Claim 1 wherein said cathode (2) has substantially the same thickness at a portion surrounded by both a surface in contact with said electrolyte (3) and a surface in contact with said heat transfer means (5).

27. An apparatus according to Claim 26 wherein said cathode (2) is columnar and said heat transfer means (5) is inserted in a central cavity formed in said columnar cathode.

28. An apparatus according to Claim 27 wherein said heat transfer means (5) is press fitted in said cathode (2).

29. An apparatus according to Claim 28 wherein a filler having good thermal conductivity is interposed between said cathode (2) and said heat transfer means (5) to substantially fill up a space therebetween.

30. An apparatus according to Claim 29 wherein said filler is grease.

31. An apparatus according to Claim 27 wherein said cathode (2) and said heat transfer means (5) are connected to each other by welding.

32. An apparatus according to Claim 1 wherein said heat transfer means (5) is fixed to said container (4) and said cathode (2) is fixed to said heat transfer means (5) so as to be supported.

33. An apparatus according to Claim 1 wherein said heat transfer means (5) is at least partly electrically conductive and said conductive portion of said heat transfer means (5) is electrically connected to said cathode (2) and said power supply (9), respectively.

34. An apparatus according to Claim 1 further comprising means (15) for liquidizing a gas generated from said electrolyte (3) when electric power is conducted to the electrodes (1, 2) and returning the liquidized gas to said container.

35. An apparatus according to claim 1 wherein said cathode (2) is formed by cold forging.

36. An apparatus according to claim 1 wherein the distance between the electrodes (1, 2) is substantially uniform.

37. An apparatus according to claim 1 wherein said electrolyte (3) contains LiOD.

38. A method fcr utilizing heat generated due to the effect caused by the absorption of hydrogen or an isotope thereof in a hydrogen-absorbing metal or alloy thereof, comprising the steps of:
applying DC current across a cathode (2) comprising said hydrogen-absorbing metal or an alloy thereof and an anode (1) both contacted in an electrolyte (3) filled in a container (4) and containing at least deuterated water to generate excess heat in said cathode owing to the said effect;
deriving heat generated in said cathode (2) by means of heat transfer means (5), said heat transfer means comprising a solid portion made of thermally conductive material, said solid portion being connected thermally and fixedly to said cathode (2); and
converting the derived heat into work.

39. A method according to claim 38 further comprising the step of controlling amounts of excess heat generated in said cathode (2) by controlling the value of current applied to the electrodes (1, 2).

40. A method according to Claim 39 wherein in said step of controlling the amount of excess heat generated, said current value is controlled such that the temperature of said cathode (2) is not greater than the recrystallization temperature of said cathode.

## Patentansprüche

1. Vorrichtung zur Nutzung der Wärme, die durch den Effekt erzeugt worden ist, der durch die Absorption von Wasserstoff oder eines Wasserstoffisotops in einem Wasserstoff-absorbierenden Metall oder einer Metalllegierung hervorgerufen wird, die umfaßt:
- einen Behälter (4), der eine Kathode (2), die das Wasserstoff-absorbierende Metall oder die Wasserstoff-absorbierende Metalllegierung und eine Anode (1) enthält,
- einen Elektrolyten (3) in dem Behälter, der mindestens schweres Wasser enthält,
- eine Stromversorgung (9, 63, 76) zum Anlegen von Gleichstrom an die Kathode und die Anode,
**gekennzeichnet durch**
- eine Einrichtung zur Wärmeübertragung (5, 125), die einen massiven Abschnitt aus wärmeleitfähigem Material umfaßt, wobei dieser massive Abschnitt zur Übertragung der in der Kathode durch den genannten Effekt erzeugten Wärme thermisch und fest mit der Kathode verbunden ist, und
- eine Vorrichtung (8, 11, 126) zur Durchführung von Arbeiten unter Nutzung der von der Kathode durch die Übertragungseinrichtung (5, 125) übertragenen Wärme.

2. Vorrichtung gemäß Anspruch 1, die des weiteren Einrichtungen (26; 56-61; 77-81) zur Regelung bzw. Steuerung der Menge der in der Kathode (2) erzeugten Wärme umfaßt.

3. Vorrichtung gemäß Anspruch 2, wobei die Regel- bzw. Steuereinrichtungen die Menge der in der Kathode erzeugten Wärme durch Ändern des Wertes des durch die Stromversorgung der Kathode (2) und der Anode (1) zugeführten Stroms steuern bzw. regeln.

4. Vorrichtung gemäß Anspruch 3, wobei zur Regelung bzw. Steuerung des Stromwertes ein Regelwiderstand (61; 81) mit der Stromversorgung (63; 76) und den Elektroden (1, 2) verbunden ist.

5. Vorrichtung gemäß Anspruch 3, wobei zur Regelung bzw. Steuerung der Leitungszeit des Stroms ein Schalter (23, 24; 161) mit der Stromversorgung (9; 63) und den Elektroden (1, 2) verbunden ist.

6. Vorrichtung gemäß Anspruch 2, wobei die Regeleinrichtung eine Einrichtung (57) zum Erfassen der Temperaturen in der Kathode (2) und eine Einrichtung (61; 161) zum Ändern des Wertes des von der Stromverversorgung (8, 63) an die Kathode (2) und die Anode (1) angelegten Stroms auf der Basis der erfaßten Temperatur umfaßt.

7. Vorrichtung gemäß Anspruch 2, wobei die Regeleinrichtung eine Einrichtung (57) zum Erfassen der Temperaturen in der Wärmeübertragungseinrichtung (5) und eine Einrichtung (61; 161) zum Ändern des Wertes des von der Stromversorgung (8, 63) an die Kathode (2) und die Anode (1) angelegten Stroms auf der Basis der erfaßten Temperatur umfaßt.

8. Vorrichtung gemäß Anspruch 2, wobei die Regeleinrichtung eine Einrichtung (56) zum Erfassen des Umfangs der von der Einrichtung zur Durchführung von Arbeiten (11) durchgeführten Arbeit und eine Einrichtung (61; 161) zum Ändern des Wertes des von der Stromverversorgung (8, 63) an die Kathode (2) und die Anode (1) angelegten Stroms auf der Basis des erfaßten Arbeitsumfangs umfaßt.

9. Vorrichtung gemäß Anspruch 1, wobei die Einrichtung zur Durchführung von Arbeiten zur Erhöhung der Temperatur der die genannte Einrichtung umgebenden Luft die von der Kathode übertragene Wärme, so wie sie ist, nutzt.

10. Vorrichtung gemäß Anspruch 1, wobei die Einrichtung zur Durchführung von Arbeiten die von der Kathode übertragene Wärme in einen anderen Energietyp umwandelt.

11. Vorrichtung gemäß Anspruch 10, wobei der andere Energietyp elektrische Energie ist.

12. Vorrichtung gemäß Anspruch 11, wobei die Einrichtung zur Durchführung von Arbeiten eine thermoelektrische Umwandlungseinrichtung (8, 11) ist.

13. Vorrichtung gemäß Anspruch 12, der des weiteren Einrichtungen zum Anlegen der elektrischen Enegie an die Elektroden (1, 2) umfaßt.

14. Vorrichtung gemäß Anspruch 13, der des weiteren Vorrichtungen (14; 62; 80) zum Schalten der Verbindung zwischen den Elektroden (1, 2) und der Stromversorgung (9; 63; 76) zur Verbindung zwischen den Elektroden (1, 2) und der thermoelektrischen Umwandlungsvorrichtung (8) umfaßt.

15. Vorrichtung gemäß Anspruch 10, wobei der andere Energietyp mechanische Energie ist.

16. Vorrichtung gemäß Anspruch 15, wobei die Einrichtung zur Durchführung von Arbeiten eine Kraftmaschine mit äußerer Verbrennung ist.

17. Vorrichtung gemäß Anspruch 16, wobei die Kraftmaschine mit äußerer Verbrennung eine Sterlingmaschine ist.

18. Vorrichtung gemäß Anspruch 1, wobei die Wärmeübertragungseinrichtung (5) die in der Kathode erzeugte Wärme mit Hilfe eines Wärmemediums zur Einrichtung zur Durchführung von Arbeiten überträgt.

19. Vorrichtung gemäß Anspruch 18, wobei das Wärmemedium ein Feststoff mit einer hohen thermischen Leitfähigkeit ist und die Wärme aus der Kathode durch das Wärmemedium geleitet wird.

20. Vorrichtung gemäß Anspruch 19, wobei der Feststoff ein Metall ist.

21. Vorrichtung gemäß Anspruch 18, wobei das Wärmemedium ein Fluid ist.

22. Vorrichtung gemäß Anspruch 21, wobei das Fluid durch die Kathode (2) und die Einrichtung zur Durchführung von Arbeiten (8, 11) umläuft und dabei den gleichen Phasenzustand annimmt, d. h., entweder die flüssige oder die gasförmige Phase aufrechterhält.

23. Vorrichtung gemäß Anspruch 21, wobei das Fluid durch die Kathode (2) und die Einrichtung zur Durchführung von Arbeiten (8, 11) umläuft und einen anderen Phasenzustand annimmt.

24. Vorrichtung gemäß Anspruch 23, wobei das Fluid in einem Wärmerohr umläuft.

25. Vorrichtung gemäß Anspruch 18, wobei das Wärmemedium (125) als dünne Schicht auf der Oberfläche der Kathode liegt.

26. Vorrichtung gemäß Anspruch 1, wobei die Kathode (2) an einem Abschnitt, der sowohl von einer Fläche, die mit dem Elektrolyten (3) in Kontakt ist, als auch von einer Fläche umgeben ist, die mit der Wärmeübertragungseinrichtung (5) in Kontakt ist, im wesentlichen die gleiche Dicke aufweist.

27. Vorrichtung gemäß Anspruch 26, wobei die Kathode (2) säulenförmig ist und die Wärmeübertragungseinrichtung (5) in einen zentralen Hohlraum eingeführt ist, der in der säulenförmigen Kathode ausgeführt ist.

28. Vorrichtung gemäß Anspruch 27, wobei die Wärmeübertragungseinrichtung (5) in Preßpassung in der Kathode (2) angeordnet ist.

29. Vorrichtung gemäß Anspruch 28, wobei ein Füllstoff mit einer guten thermischen Leitfähigkeit zwischen Kathode (2) und Wärmeübertragungseinrichtung (5) vorhanden ist und den dazwischenliegenden Raum im wesentlichen ausfüllt.

30. Vorrichtung gemäß Anspruch 29, wobei der Füllstoff ein Schmierstoff ist.

31. Vorrichtung gemäß Anspruch 27, wobei die Kathode (2) und die Wärmeübertragungseinrichtung (5) miteinander durch Schweißen verbunden sind.

32. Vorrichtung gemäß Anspruch 1, wobei die Wärmeübertragungseinrichtung (5) am Behälter (4) und die Kathode (2) an der Wärmeübertragungseinrichtung (5) befestigt ist, so daß sie abgestützt sind.

33. Vorrichtung gemäß Anspruch 1, wobei die Wärmeübertragungseinrichtung (5) mindestens teilweise elektrisch leitfähig ist und der leitfähige Abschnitt der Wärmeübertragungseinrichtung (5) elektrisch mit der Kathode (2) bzw. der Stromversorgung (9) verbunden ist.

34. Vorrichtung gemäß Anspruch 1, die des weiteren eine Einrichtung (15) zur Verflüssigung von Gas, das vom Elektrolyten (3) durch Anlegen elektrischer Engerie an die Elektroden (1, 2) erzeugt wurde, und zur Rückführung des verflüssigten Gases in den Behälter umfaßt.

35. Vorrichtung gemäß Anspruch 1, wobei die Kathode (2) durch Kaltschmieden hergestellt ist.

36. Vorrichtung gemäß Anspruch 1, wobei der Abstand zwischen den Elektroden (1, 2) im wesentlichen gleichmäßig ist.

37. Vorrichtung gemäß Anspruch 1, wobei der Elektrolyt (3) LiOD enthält.

38. Verfahren zum Nutzen von Wärme, die durch den Effekt erzeugt worden ist, der durch die Absorption von Wasserstoff oder eines Wasserstoffisotops in einem Wasserstoff-absorbierenden Metall oder in einer Metalllegierung hervorgerufen wird, mit den Schritten:
- Anlegen von Gleichstrom an eine Kathode (2), die das Wasserstoff-absorbierende Metall oder die Wasserstoff-absorbierende Metalllegierung enthält, und an eine Anode (1), die beide in einem in einen Behälter (4) eingefüllten Elektrolyten (3) miteinander in Kontakt stehen, wobei der Behälter mindestens schweres Wasser enthält, um in der Kathode durch den genannten Effekt eine Überschußwärme zu erzeugen;
- Gewinnen der in der Kathode (2) erzeugten Wärme mit Hilfe einer Wärmeübertragungseinrichtung (5), wobei die Wärmeübertragungseinrichtung einen massiven Abschnitt umfaßt, der aus einem thermisch leitfähigen Material besteht, und der massive Abschnitt thermisch und fest mit der Kathode (2) verbunden ist, und
- Umwandeln der gewonnenen Wärme in Arbeit.

39. Verfahren gemäß Anspruch 38, das des weiteren den Schritt der Regelung bzw. Steuerung der Menge der in der Kathode (2) erzeugten Überschußwärme durch Regeln bzw. Steuern des Wertes des an die Elektroden (1, 2) angelegten Stroms umfaßt.

40. Verfahren gemäß Anspruch 39, wobei im Schritt des Steuerns der Menge der erzeugten Überschußwärme derart geregelt bzw. gesteuert wird, daß die Temperatur der Kathode (2) nicht über der Rekristallisationstemperatur der Kathode liegt.

## Revendications

1. Dispositif permettant l'utilisation de la chaleur générée par l'absorption d'hydrogène ou d'un de ses isotopes par un métal absorbant l'hydrogène ou un de ses alliages, comprenant :
un conteneur (4) supportant une cathode (2) comprenant ledit métal absorbant l'hydrogène ou un alliage de celui-ci et une anode (1);
un éléctrolyte (3) dans ledit conteneur contenant au moins de l'eau deutérée;
une source alimentation en courant (9; 63; 76) pour l'application d'un courant continu entre lesdites cathode et anode ;
caractérisé en ce que
des moyens de transfert de chaleur (5; 125) comprenant une partie solide constituée d'un matériau thermiquement conducteur, ladite partie solide étant connectée à ladite cathode de façon permanente et de façon à permettre les échanges thermiques, pour transférer la chaleur générée dans ladite cathode suite à l'effet absorbant; et
des moyens (8; 11; 126) pour réaliser un travail en utilisant la chaleur transférée de ladite cathode à l'aide desdits moyens de transfert de chaleur (5; 125).

2. Dispositif selon la revendication 1 comprenant en outre des moyens (26; 56-61; 77-81) pour la commande de la quantité de chaleur générée dans ladite cathode (2).

3. Dispositif selon la revendication 2 dans lequel lesdits moyens de commande commandent la quantité de chaleur générée dans ladite cathode en faisant varier la valeur du courant appliqué par ladite source d'alimentation en courant entre lesdites cathode (2) et anode (1).

4. Dispositif selon la revendication 3 dans lequel une résistance variable (61 ; 81) est connectée entre ladite source d'alimentation en courant (63; 76) et les électrodes (1, 2) de façon à contrôler la valeur dudit courant.

5. Dispositif selon la revendication 3 dans lequel un commutateur (23, 24; 161) est relié entre ladite source d'alimentation en courant (9; 63) et les électrodes (1, 2) de façon à contrôler le temps de conduction dudit courant.

6. Dispositif selon la revendication 2 dans lequel lesdits moyens de commande comprennent des moyens (57) pour la détection des températures dans ladite cathode (2), et des moyens (61; 161) pour faire varier en fonction d'une température détectée la valeur du courant appliqué par ladite alimentation en courant (8, 63) auxdites cathode (2) et anode (1).

7. Dispositif selon la revendication 2 dans lequel lesdits moyens de comande comprennent des moyens (57) pour la détection des températures dans lesdits moyens de transfert de chaleur (5) et des moyens (61; 161) pour faire varier en fonction d'une température détectée la valeur du courant appliqué par ladite source d'alimentation en courant (8, 63) auxdites cathode (2) et anode (1).

8. Dispositif selon la revendication 2, dans lequel lesdits moyens de commande comprennent des moyens (56) pour la détection des quantités de travail réalisées par ledits moyens effectuant le travail (11), et des moyens (61, 161) pour faire varier en fonction d'une quantité de travail détectée, la valeur du courant appliqué par ladite source d'alimentation en courant (8, 63) auxdites cathode (2) et anode (1).

9. Dispositif selon la revendication 1 dans lequel lesdits moyens effectuant le travail utilisent la chaleur transférée à partir de ladite cathode, telle quelle, de façon à élever la température desdits moyens dans l'atmosphère ambiante.

10. Dispositif selon la revendication 1 dans lequel lesdits moyens effectuant le travail convertissent la chaleur transférée de ladite cathode en énergie d'un type différent.

11. Dispositif selon la revendication 10 dans lequel ladite énergie d'un type différent est l'énergie électrique.

12. Dispositif selon la revendication 11 dans lequel lesdits moyens effectuant le travail sont un dispositif de conversion thermoélectrique (8, 11).

13. Dispositif selon la revendication 12 comprenant en outre des moyens pour l'application de ladite énergie électrique aux électrodes (1, 2).

14. Dispositif selon la revendication 13 comprenant en outre des moyens (14; 62; 80) pour commuter la connexion entre lesdites électrodes (1, 2) et ladite source d'alimentation en courant (9; 63; 76) en connexion entre lesdites électrodes (1, 2) et ledit dispositif de conversion thermoélectrique (8).

15. Dispositif selon la revendication 10 dans lequel ladite énergie d'un type différent est l'énergie mécanique.

16. Dispositif selon la revendication 15 dans lequel lesdits moyens effectuant le travail sont un moteur de combustion externe.

17. Dispositif selon la revendication 16 dans lequel ledit moteur de combustion externe est un moteur sterling.

18. Dispositif selon la revendication 1 dans lequel lesdits moyens de transfert de chaleur (5) transfèrent la chaleur générée dans ladite cathode auxdits moyens effectuant le travail à l'aide d'un milieu conducteur de chaleur.

19. Dispositif selon la revendication 18 dans lequel ledit milieu conducteur de chaleur est constitué d'un matériau solide de haute conductivité thermique et dans lequel la chaleur dans ladite cathode est transférée dans ledit milieu conducteur de chaleur.

20. Dispositif selon la revendication 19 dans lequel ledit matériau solide est un métal.

21. Dispositif selon la revendication 18 dans lequel ledit milieu conducteur de chaleur est un fluide.

22. Dispositif selon la revendication 21 dans lequel ledit fluide circule dans ladite cathode (2) et lesdits moyens effectuant le travail (8, 11) tout en adoptant le même type de phase, c'est-à-dire en maintenant l'état liquide ou gazeux.

23. Dispositif selon la revendication 21 dans lequel ledit fluide circule dans ladite cathode (2) et lesdits moyens effectuant le travail (8, 11), tout en adoptant un type de phase différent.

24. Dispositif selon la revendication 23 dans lequel ledit fluide circule dans un tube de chauffe.

25. Dispositif selon la revendication 18 dans lequel ledit milieu conducteur de chaleur (125) est laminé à la surface de ladite cathode.

26. Dispositif selon la revendication 1 dans lequel ladite cathode (2) a essentiellement la même épaisseur au niveau d'une partie entourée à la fois par une surface en contact avec ledit électrolyte (3) et une surface en contact avec lesdits moyens de transfert de chaleur (5).

27. Dispositif selon la revendication 26 dans lequel ladite cathode (2) est en forme de colonne et lesdits moyens de transfert de chaleur (5) sont insérés à l'intérieur d'une cavité centrale formée dans ladite cathode en forme de colonne.

28. Dispositif selon la revendication 27 dans lequel lesdits moyens de transfert de chaleur (5) sont disposés par ajustage serré dans ladite cathode (2).

29. Dispositif selon la revendication 28 dans lequel une matière de remplissage présentant une bonne conductivité thermique est disposée entre ladite cathode (2) et lesdits moyens de transfert de chaleur (5) de façon à remplir pratiquement tout l'espace restant.

30. Dispositif selon la revendication 29 dans lequel ladite matière de remplissage est de la graisse.

31. Dispositif selon la revendication 27 dans lequel ladite cathode (2) et lesdits moyens de transfert de chaleur (5) sont connectés les uns aux autres par soudage.

32. Dispositif selon la revendication 1 dans lequel lesdits moyens de transfert de chaleur (5) sont fixés audit conteneur (4) et ladite cathode (2) est fixée auxdits moyens de transfert de chaleur (5) de façon à être maintenus.

33. Dispositif selon la revendication 1 dans lequel lesdits moyens de transfert de chaleur (5) sont au moins partiellement conducteurs de l'électricité et ladite partie conductrice desdits moyens de transfert de chaleur (5) est connectée respectivement à ladite cathode (2) et à ladite alimentation en courant (9) de façon à permettre la conduction électrique.

34. Dispositif selon la revendication 1 comprenant en outre des moyens (15) pour liquéfier un gaz généré à partir dudit électrolyte (3) lorsqu'une énergie électrique est appliquée aux électrodes (1, 2) et pour le renvoi dudit gaz liquéfié audit conteneur.

35. Dispositif selon la revendication 1 dans lequel ladite cathode (2) est formée par façonnage massif à froid.

36. Dispositif selon la revendication 1 dans lequel la distance entre les électrodes (1, 2) est à peu près uniforme.

37. Dispositif selon la revendication 1 dans lequel ledit électrolyte (3) contient du LiOD.

38. Procédé permettant l'utilisation de la chaleur générée par l'absorption d'hydrogène ou d'un de ses isotopes par un métal absorbant l'hydrogène ou un de ses alliages comprenant les étapes consistant à :
appliquer un courant continu à travers la cathode (2) comprenant ledit métal absorbant l'hydrogène ou son alliage et à travers une anode (1), les deux électrodes étant en contact avec un électrolyte (3) contenu dans un conteneur (4) comprenant au moins de l'eau deutérée, de façon à générer un excès de chaleur dans ladite cathode par suite de l'effet absorbant;
dériver la chaleur générée dans ladite cathode (2) à l'aide de moyens de transfert de chaleur (5), lesdits moyens de transfert de chaleur comprenant une partie solide constituée d'un matériau thermiquement conducteur, ladite partie solide étant connectée à ladite cathode (2) de façon permanente et de façon à assurer la conduction thermique; et
convertir la chaleur ainsi dérivée en travail.

39. Procédé selon la revendication 38 comprenant en outre l'étape consistant à commander les quantités de chaleur excédentaires générées dans ladite cathode (2) par la commande de la valeur du courant appliqué aux électrodes (1, 2).

40. Procédé selon la revendication 39 dans lequel lors de l'étape de commande de la quantité de chaleur excédentaire générée, ladite valeur du courant est commandée de telle sorte que la température de ladite cathode (2) ne soit pas supérieure à la température de recristallisation de ladite cathode.
